# NEUE EUROPÄISCHE PATENTSCHRIFT

(11) **EP 0 617 079 B2**
(45) Veröffentlichungstag und Bekanntmachung des Hinweises auf die Entscheidung über den Einspruch: **08.12.2004**
(45) Hinweis auf die Patenterteilung: 24.02.1999
(21) Anmeldenummer: 94103959.6
(22) Anmeldetag: 15.03.1994
(51) Int. Cl.: C08K 5/521, C08K 5/5333, C08L 75/04

(54) **Selbstverlöschende thermoplastische Polyurethane sowie Verfahren zu ihrer Herstellung**
Self extinguishing thermoplastic polyurethanes and process for their preparation
Polyuréthanes thermoplastiques auto-extuiguibles et procédé de leur préparation

(30) Priorität: 22.03.1993 DE 4309194
(43) Veröffentlichungstag der Anmeldung: 28.09.1994
(73) Patentinhaber: Elastogran GmbH, D-49440 Lemförde (DE)
(72) Erfinder: Hackl, Christa, D-49152 Bad Essen (DE); Lehrich, Friedhelm, Dr., D-49448 Lemfoerde (DE); Bittner, Gerhard, Dr., D-49356 Diepholz (DE)
(74) Vertreter: Meyer, Udo

(56) Entgegenhaltungen:
- EP-A- 0 134 455
- EP-A- 0 170 206
- EP-A- 0 316 736
- EP-A- 0 373 457
- US-A- 4 061 605
- US-A- 4 407 981
- US-A- 4 757 093
- US-A- 5 147 912
- Hall et al Conference "Fire Safety Science, Proceedings of the First International Symposium",Berkeley(USA)1985,veröffl.1986,S eiten 421-430

## Beschreibung

Die Erfindung betrifft selbstverlöschende, mindestens ein Flammschutzmittel sowie gegebenenfalls weitere übliche Zusatzstoffe und/oder Hilfsmittel enthaltende thermoplastische Polyurethane sowie ein Verfahren zu ihrer Herstellung durch Umsetzung von
a) organischen und/oder modifizierten organischen Diisocyanaten mit
b) höhermolekularen, im wesentlichen difunktionellen Polyhydroxylverbindungen und gegebenenfalls
c) difunktionellen Kettenverlängerungsmitteln in Gegenwart
d) mindestens eines Flammschutzmittels,
e) mindestens eines Katalysators sowie gegebenenfalls
f) weiterer Hilfsmittel und/oder Zusatzstoffe.

Die Herstellung von thermoplastischen Polyurethanen (TPU) ist bekannt und wird in zahlreichen Patent- und Literaturpublikationen beschrieben.

Beispielhaft genannt sei das Kunststoff-Handbuch, Band VII, Polyurethane, Carl-Hanser-Verlag, München, 1. Auflage, 1966, herausgegeben von Dr. R. Vieweg und Dr. A. Höchtlen, und 2. Auflage, 1983, herausgegeben von Dr. G. Oertel.

Zur Herstellung von TPU können die an sich bekannten, insbesondere difunktionellen Aufbaukomponenten Verwendung finden. Beispielhaft genannt seien höhermolekulare Polyhydroxylverbindungen, die die sogenannte Weichphase bilden, z.B. Polyoxyalkylen-glykole, wie Polyoxypropylen-, Polyoxyethylen-, Polyoxypropylen-polyoxyethylen-, Polyoxybutylen-, Polyoxybutylen-polyoxyethylenoder Polyoxybutylen-polyoxypropylen-glykole oder Polyesterdiole wie Alkandiol-polyadipate; aromatische oder aliphatische Diisocyanate, wie z.B. 4,4'-Diphenylmethan-diisocyanat (MDI) oder 1,6-Hexamethylen-diisocyanat (HDI); und niedermolekulare Kettenverlängerungsmittel zur Bildung der Hartsegmente, z.B. Alkandiole oder Dialkylen-glykole, wie z.B. 1,4-Butandiol oder Diethylenglykol.

Ein Nachteil der TPU ist ihre leichte Entflammbarkeit. Zur Verminderung dieses Nachteils werden den TPU Flammschutzmittel, wie beispielsweise halogenhaltige Verbindungen, einverleibt. Der Zusatz dieser Produkte wirkt sich jedoch vielfach negativ auf die mechanischen Eigenschaften der erhaltenen TPU-Formmassen aus. Auch sind aufgrund der korrosiven Wirkung der halogenhaltigen Substanzen halogenfreie selbstverlöschende TPU-Formmassen erstrebenswert.

Zur Flammfestausrüstung von Polyurethan-Schaumstoffen ist bereits der Einsatz von Melamin oder Melamin-Derivaten als Flammschutzmittel vorgeschlagen worden (vgl. unter anderem US-A-4 221 875, US-A-4 258 141, US-A-4 293 657, JP-A-79/75 629. DE-A-40 05 373, EP-A-389 768 und EP-A-352 528).

In der JP-A-79/85 242 wird der Einsatz von Melamincyanurat als Flammschutzmittel unter anderem auch für TPU angesprochen.

Darüber hinaus sind eine Vielzahl von anderen halogenfreien Verbindungen, zum Beispiel verschiedenartiger Phosphor-Verbindungen, zur Flammfestausrüstung von thermoplastischen Polymerisaten, wie z.B. Polystyrol oder Polyolefinen, vorgeschlagen worden. Der Einsatz vieler dieser halogenfreien Flammschutzmittel des Standes der Technik in TPU führt dazu, daß die Temperaturbeständigkeit des TPU während der Verarbeitung nicht ausreichend ist und Zersetzungserscheinungen auftreten, wodurch ein starker Abfall der mechanischen Eigenschaften des TPU gegeben ist.

Der vorliegenden Erfindung lag die Aufgabe zugrunde, selbstverlöschende thermoplastische Polyurethane aufzuzeigen, die keine halogenhaltigen Flammschutzmittel enthalten, nach Entzündung mit einer heißen Flamme in wenigen Sekunden nicht brennend verlöschen und nicht bzw. nicht brennend abtropfen und dabei gleichzeitig gute mechanische und Verarbeitungseigenschaften aufweisen.

Diese Aufgabe wurde erfindungsgemäß dadurch gelöst, daß zur Flammfestausrüstung der TPU organische Phosphate und/oder organische Phosphonate in Mischung mit Melamincyanurat eingesetzt werden.

Gegenstand der Erfindung sind demzufolge selbstverlöschende thermoplastische Polyurethane, die mindestens ein Flammschutzmittel sowie gegebenenfalls weitere an sich übliche Zusatzstoffe und/oder Hilfsmittel enthalten, wobei sie als Flammschutzmittel mindestens ein organisches Phosphat und/oder mindestens ein organisches Phosphonat und neben den organischen Phosphaten und/oder organischen Phosphonaten als Flammschutzmittel zusätzlich noch Melamincyanurat enthalten.

Gegenstand der Erfindung ist weiterhin ein Verfahren zur Herstellung von selbstverlöschenden thermoplastischen Polyurethanen durch Umsetzung von
a) organischen und/oder modifizierten organischen Diisocyanaten mit
b) höhermolekularen, insbesondere im wesentlichen difunktionellen Polyhydroxylverbindungen und gegebenenfalls
c) Kettenverlängerungsmitteln in Gegenwart
d) mindestens eines Flammschutzmittels,
e) mindestens eines Katalysators sowie gegebenenfalls
f) weiterer Hilfsmittel und/oder Zusatzstoffe,
das dadurch gekennzeichnet ist, daß als Flammschutzmittel (d) mindestens ein organisches Phosphat und/oder mindestens ein organisches Phosphonat mit Melamincyanurat verwendet werden.

Die thermoplastischen Polyurethane werden im Rahmen dieser Erfindung auch kurz TPU genannt. Es handelt sich hierbei um die an sich bekannten, im wesentlichen linearen, thermoplastisch verarbeitbaren Polyurethane.

Es war überraschend und in keiner Weise vorhersehbar, daß durch das Einarbeiten von organischen Phosphaten und/oder organischen Phosphonaten in TPU nicht nur selbstverlöschende Formmassen erhalten, sondern daß dabei die mechanischen und wichtigen verarbeitungs- und anwendungstechnischen Eigenschaften der TPU nicht negativ beeinflußt werden.

Für die erfindungsgemäße Flammfestausrüstung eignen sich prinzipiell alle an sich bekannten TPU, die nach den an sich üblichen Verfahren hergestellt werden können. Besonders vorteilhafte Ergebnisse haben sich bei den Polyester-TPU ergeben.

Zu den erfindungsgemäßen TPU und ihren Aufbaukomponenten a) bis f) ist im einzelnen folgendes auszuführen:
a) als organische und/oder modifizierte organische Diisocyanate kommen aliphatische, cycloaliphatische oder vorzugsweise aromatische Diisocyanate in Betracht. Im einzelnen seien beispielhaft genannt: aliphatische Diisocyanate, wie Hexamethylen-diisocyanat-1,6, 2-Methyl-pentamethylen-diisocyanat-1,5, 2-Ethyl-butylen-diisocyanat-1,4 oder Mischungen aus mindestens zwei der genannten aliphatischen Diisocyanate; cycloaliphatische Diisocyanate, wie Isophoron-diisocyanat, 1,4-Cyclohexan-diisocyanat, 1-Methyl-2,4- oder -2,6-cyclohexan-diisocyanat sowie die ent-sprechenden Isomerengemische, 4,4'-, 2,4'- und 2,2'-Dicyclohexylmethan-diisocyanat sowie die entsprechenden Isomerengemische; und vorzugsweise aromatische Diisocyanate, wie 2,4-Toluylen-diisocyanat, Gemische aus 2,4-und 2,6-Toluylen-diisocyanat, 4,4'-, 2,4'- und 2,2'-Diphenylmethan-diisocyanat, Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan-1,2, Gemische aus 4,4'-, 2,4'- und 2,2'-Diisocyanatodiphenylethan-1,2, vorteilhafterweise solche mit einem 4,4'-Diisocyanato-diphenylethan-1,2-Gehalt von mindestens 95 Gew.%, und 1,5-Naphthylen-diisocyanat. Vorzugsweise verwendet werden Diphenylmethan-diisocyanat-Isomerengemische mit einem 4,4'-Diphenylmethan-diisocyanatgehalt von größer als 96 Gew.% und insbesondere im wesentlichen reines 4,4'-Diphenylmethan-diisocyanat.
   Die organischen Diisocyanate können gegebenenfalls in untergeordneten Mengen, z.B. in Mengen bis zu 3 Mol.%, vorzugsweise bis zu 1 Mol%, bezogen auf das organische Diisocyanat, durch ein tri- oder höherfunktionelles Polyisocyanat ersetzt werden, wobei dessen Menge jedoch so begrenzt werden muß, daß noch thermoplastisch verarbeitbare Polyurethane erhalten werden. Eine größere Menge an derartigen mehr als difunktionellen Isocyanaten wird zweckmäßigerweise durch die Mitverwendung von weniger als difunktionellen Verbindungen mit reaktiven Wasserstoffatomen ausgeglichen, so daß eine zu weit gehende chemische Vernetzung des Polyurethans vermieden wird. Beispiele für mehr als difunktionelle Isocyanate sind Mischungen aus Diphenylmethan-diisocyanaten und Polyphenylpolymethylen-polyisocyanaten, sog. Roh-MDI, sowie flüssige, mit Isocyanurat-, Harnstoff-, Biuret-, Allophanat-, Urethanund/oder Carbodiimidgruppen modifizierte 4,4'- und/oder 2,4'-Diphenylmethan-diisocyanate.
   Als geeignete monofunktionelle Verbindungen mit reaktivem Wasserstoffatom, die auch als Molekulargewichtsregler verwendbar sind, seien z.B. genannt: Monoamine wie z.B. Butyl-, Dibutyl-, Octyl-, Stearyl-, N-Methylstearylamin, Pyrrolidon, Piperidin und Cyclohexylamin, und Monoalkohole wie z.B. Butanol, Amylalkohol, 1-Ethylhexanol, Octanol, Dodecanol, Cyclohexanol und Ethylenglykolmonoethylether.
b) Als höhermolekulare Polyhydroxylverbindungen mit Molekulargewichten von 500 bis 8000 eignen sich Polyetherdiole und insbesondere Polyesterdiole. Eingesetzt wird beispielsweise Polybutadiendiol, mit dem auch gute Ergebnisse bei der Herstellung von vernetzbaren TPU erzielt werden. In Betracht kommen daneben auch andere hydroxylgruppenhaltige Polymere mit Ether- oder Estergruppen in der Polymerkette, beispielsweise Polyacetale, wie Polyoxymethylene, und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung. Die Polyhydroxylverbindungen sollten zumindest überwiegend linear sein und müssen im Sinne der Isocyanatreaktion im wesentlichen difunktionell aufgebaut sein. Die genannten Polyhydroxylverbindungen können als Einzelkomponenten oder in Form von Mischungen zur Anwendung kommen.
   Geeignete Polyetherdiole können nach bekannten Verfahren, beispielsweise durch anionische Polymerisation von Alkylenoxiden mit Alkalihydroxiden, wie Natrium- oder Kaliumhydroxid, oder Alkalialkoholaten, wie Natriummethylat, Natrium- oder Kaliumethylat oder Kaliumisopropylat, als Katalysatoren und unter Zusatz mindestens eines Startermoleküls, das 2 bis 3, vorzugsweise 2, reaktive Wasserstoffatome gebunden enthält, oder durch kationische Polymerisation mit LewisSäuren, wie Antimonpentachlorid, Borfluorid-Etherat u.a., oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid und insbesondere bevorzugt Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure und/oder Glutarsäure, Alkanolamine, wie z.B. Ethanolamin, N-Alkylalkanolamine, N-Alkyl-dialkanolamine, wie z.B. N-Methyl- und N-Ethyl-diethanolamin und vorzugsweise zweiwertige, gegebenenfalls Etherbrücken gebunden enthaltende Alkohole, wie z.B. Ethandiol, Propandiol-1,2 und -1,3, Butandiol-1,4, Diethylenglykol, Pentandiol-1,5, Hexandiol-1,6, Dipropylenglykol, 2-Methylpentandio1-1,5 und 2-Ethyl-butandiol-1,4. Die Startermoleküle können einzeln oder als Gemische eingesetzt werden.
   Vorzugsweise verwendet werden Polyetherole aus 1,2-Propylenoxid und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist. Derartige Polyetherole können erhalten werden, indem man z.B. an das Startermolekül zunächst das 1,2-Propylenoxid und daran anschließend das Ethylenoxid polymerisiert oder zunächst das gesamte 1,2-Propylenoxid im Gemisch mit einem Teil des Ethylenoxids copolymerisiert und den Rest des Ethylenoxids anschließend anpolymerisiert oder schrittweise zunächst einen Teil des Ethylenoxids, dann das gesamte 1,2-Propylenoxid und dann den Rest des Ethylenoxids an das Startermolekül anpolymerisiert.
   Insbesondere geeignet sind ferner die hydroxylgruppenhaltigen Polymerisationsprodukte des Tetrahydrofurans.
   Die im wesentlichen linearen Polyetherole besitzen üblicherweise Molekulargewichte von 500 bis 8000, vorzugsweise 600 bis 6000 und insbesondere 800 bis 3500, wobei die Polyoxytetramethylen-glykole bevorzugt Molekulargewichte von 500 bis 2800 aufweisen. Sie können sowohl einzeln als auch in Form von Mischungen untereinander zur Anwendung kommen.
   Geeignete Polyesterdiole können beispielsweise aus Dicarbonsäuren mit 2 bis 12, vorzugsweise 4 bis 6, Kohlenstoffatomen und Diolen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure, und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Dicarbonsäuremonooder -diester mit 1 bis 4 Kohlenstoffatomen im Alkoholrest, Dicarbonsäureanhydride oder Dicarbonsäuredichloride zu verwenden. Beispiele für die Diole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die Diole allein oder gegebenenfalls in Mischungen untereinander verwendet werden.
   Geeignet sind ferner Ester der Kohlensäure mit den genannten Diolen, insbesondere solchen mit 4 bis 6 Kohlenstoffatomen, wie Butandiol-1,4 und/oder Hexandiol-1,6; Kondensationsprodukte von ω-Hydroxycarbonsäuren, beispielsweise ω-Hydroxycapronsäure, und vorzugsweise Polymerisationsprodukte von Lactonen, beispielsweise gegebenenfalls substituiertem ω-Caprolacton.
   Als Polyesterdiole vorzugsweise verwendet werden Ethandiolpolyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone.
   Die Polyesterdiole besitzen in der Regel Molekulargewichte von 500 bis 6000, vorzugsweise von 800 bis 3500.
c) Als Kettenverlängerungsmittel mit Molekulargewichten im allgemeinen von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4 und Hydroxyalkylenether des Hydrochinons, wie z.B. 1,4-Di-(β-hydroxyethyl)-hydrochinon sowie Polytetramethylenglykole mit Molekulargewichten von 162 bis 378.
   Zur Einstellung von Härte und Schmelzindex der TPU können die eingesetzten Mengen der Aufbaukomponenten (b) und (c) in relativ breiten molaren Verhältnissen variiert werden, wobei die Härte und die Schmelzviskosität mit zunehmendem Gehalt an Kettenverlängerungsmittel (c) ansteigt, während der Schmelzindex abnimmt.
   Zur Herstellung von weicheren TPU, z.B. solchen mit einer Härte Shore A von kleiner als 95, vorzugsweise von 95 bis 75 Shore A, können beispielsweise die im wesentlichen difunktionellen Polyhydroxylverbindungen (b) und Diole (c) vorteilhafterweise in Molverhältnissen von 1:1 bis 1:5, vorzugsweise 1:1,5 bis 1:4,5 verwendet werden, so daß die resultierenden Mischungen aus (b) und (c) ein Hydroxyläquivalentgewicht von größer als 200, und insbesondere von 230 bis 450, besitzen, während zur Herstellung von härteren TPU, z.B. solchen mit einer Härte Shore A von größer als 98, vorzugsweise von 55 bis 75 Shore D, die Molverhältnisse von (b):(c) im Bereich von 1:5,5 bis 1:15, vorzugsweise von 1:6 bis 1:12, liegen, so daß die erhaltenen Mischungen aus (b) und (c) ein Hydroxyläquivalentgewicht von 110 bis 200, vorzugsweise von 120 bis 180, aufweisen.
d) Als Flammschutzmittel werden erfindungsgemäß organische Phosphate und/oder organische Phosphonate in Mischung zusammen mit Melamincyanurat als Flammschutzmittel eingesetzt.
   Bei den organischen Phosphaten handelt es sich um die Ester, insbesondere die Triester, der Phosphorsäure, wie Trialkylphosphate und insbesondere Triarylphosphate, wie zum Beispiel Triphenylphosphat. Bevorzugt werden erfindungsgemäß als Flammschutzmittel für die TPU Phosphorsäureester der allgemeinen Formel (I) 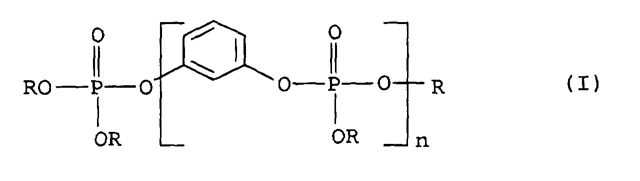 verwendet, wobei R für, gegebenenfalls substituierte, Alkyl-, Cycloalkyl- oder Phenylgruppen steht und n = 1 bis 15 bedeutet.
   Steht R in der allgemeinen Formel (I) für einen Alkylrest, kommen insbesondere solche Alkylreste mit 1 bis 8 C-Atomen in Betracht. Als Beispiel für die Cycloalkylgruppen sei der Cyclohexyl-Rest genannt. Bevorzugt werden solche Phosphorsäureester der allgemeinen Formel (I) eingesetzt, bei denen R = Phenyl oder alkylsubstituiertes Phenyl bedeutet. n ist in der allgemeinen Formel (I) insbesondere 1 oder liegt vorzugsweise im Bereich von etwa 3 bis 6. Als Beispiele für die bevorzugten Phosphorsäureester der allgemeinen Formel (I) seien das 1,3-Phenylen-bis-(diphenyl)phosphat, das 1,3-Phenylenbis-(dixylenyl)phosphat sowie die entsprechenden oligomeren Produkte mit einem mittleren Oligomerisierungsgrad von n = 3 bis 6 genannt.
   Bei den organischen Phosphonaten handelt es sich um die Ester der Phosphonsäure, insbesondere die Diester von Alkyl- oder Phenylphosphonsäuren. Beispielhaft für die erfindungsgemäß als Flammschutzmittel einzusetzenden Phosphonsäureester seien die Phosphonate der allgemeinen Formel (II) 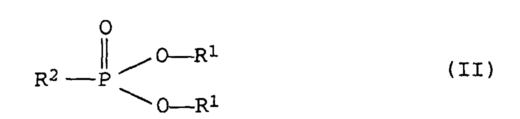 angeführt, wobei
   - R¹: für gegebenenfalls substituierte, Alkyl-, Cycloalkyl- oder Phenylgruppen steht, wobei die beiden Reste R¹ auch cyclisch miteinander verknüpft sein können und
   - R² :: für einen, gegebenenfalls substituierten, Alkyl-, Cycloalkyl- oder Phenylrest steht.

   Besonders geeignet sind dabei cyclische Phosphonate wie z.B. 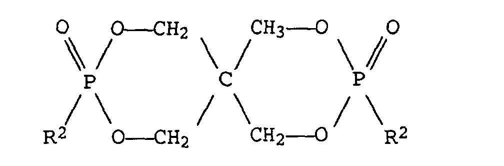 mit R² = CH₃ und C₆H₅, die sich vom Pentaerythrit ableiten, oder 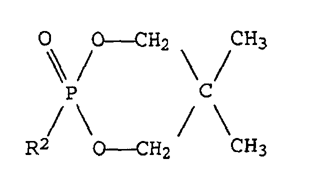 mit R² = CH₃ und C₆H₅, die sich vom Neopentylglykol ableiten, oder 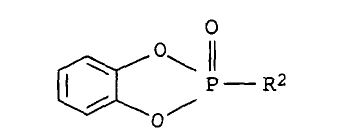 mit R² = CH₃ und C₆H₅, die sich vom Brenzkatechin ableiten, aber auch 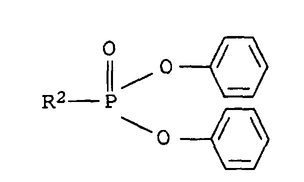 mit R² = einem unsubstituierten oder auch substituierten Phenylrest.
   Die Phosphorsäureester können erfindungsgemäß allein oder in Mischung untereinander zusammen mit Melamincyanurat eingesetzt werden. Ebenso können die Phosphonsäureester erfindungsgemäß allein oder in Mischung untereinander zusammen mit Melamincyanurat eingesetzt werden. Darüber hinaus ist es auch möglich, Mischungen aus einem oder mehreren Phosphorsäureestern mit einem oder mehreren Phosphonsäureestern erfindungsgemäß zusammen mit Melamincyanurat als Flammschutzmittel für TPU einzusetzen. Üblicherweise werden jedoch Phosphorsäureester oder Phosphonsäureester zusammen mit Melamincyanurat eingesetzt.
   In der Erfindung werden die Phosphorsäureester und/oder Phosphonsäureester in Mischung zusammen mit Melamincyanurat als Flammschutzmittel für die TPU eingesetzt, wobei dann das Gewichtsverhältnis von Phosphat und/oder Phosphonat zu Melamincyanurat vorzugsweise im Bereich von 5:1 bis 1:5 liegt.
   Das Melamincyanurat kann in handelsüblicher Form eingesetzt werden. Zweckmäßigerweise finden Verbindungen mit einer Korngröße von 90 % kleiner als 10 µm Verwendung.
e) Geeignete Katalysatoren für die Herstellung der TPU, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen Katalysatoren, wie tertiäre Amine, z.B. Triethylamin, Dimethylcyclohexylamin, N-Methylmorpholin, N,N'-Dimethylpiperazin, Diazabicyclo-(2,2,2)-octan und ähnliche, sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Gew.-Teilen pro 100 Gew.-Teilen der Mischung aus Polyhydroxylverbindung (b) und Kettenverlängerungsmittel (c) eingesetzt.
f) Daneben können den Aufbaukomponenten bei der Herstellung der TPU noch weitere Hilfsmittel und/oder Zusatzstoffe zugegeben werden. Genannt seien beispielsweise Gleitmittel, Inhibitoren, Stabilisatoren gegen Hydrolyse, Licht, Hitze oder Verfärbung, Farbstoffe, Pigmente, anorganische und/oder organische Füllstoffe und Verstärkungsmittel.
   Diese Hilfsmittel und/oder Zusatzstoffe können hierzu in die Aufbaukomponenten oder in die Reaktionsmischung zur Herstellung der TPU eingebracht werden. Nach einer anderen Verfahrensvariante können diese Hilfsmittel und/oder Zusatzstoffe (f) mit dem TPU gemischt und anschließend verschmolzen werden oder sie werden direkt der Schmelze einverleibt.
   Die verwendbaren Hilfsmittel oder Zusatzstoffe können der Fachliteratur, beispielsweise der Monographie von J.H. Saunders und K.C. Frisch "High Polymers", Band XVI, Polyurethane, Teil 1 und 2 (Verlag Interscience Publishers 1962 bzw. 1964), dem Kunststoff-Handbuch, Band 7, Polyurethane 1. und 2. Auflage (Carl Hanser Verlag, 1966 bzw. 1983) oder der DE-A 29 01 774 entnommen werden.

Zur Herstellung der erfindungsgemäßen TPU werden die Aufbaukomponenten (a), (b) und gegebenenfalls (c) in Gegenwart der erfindungsgemäßen Flammschutzmittel (d) und von Katalysatoren (e) und gegebenenfalls Hilfsmitteln und/ oder Zusatzstoffen (f) in solchen Mengen zur Reaktion gebracht, daß das Äquivalenzverhältnis von NCO-Gruppen der Diisocyanate (a) zur Summe der Hydroxylgruppen der Komponenten (b) und (c) 0,95 bis 1,10:1, vorzugsweise 0,98 bis 1,08:1 und insbesondere ungefähr 1,0 bis 1,05:1 beträgt.

Vorzugsweise werden erfindungsgemäß selbstverlöschende TPU hergestellt, bei denen das TPU ein mittleres Molekulargewicht von mindestens 100 000, bevorzugt von mindestens 400 000 und insbesondere größer als 600 000 aufweist. Die Obergrenze für das Molekulargewicht der TPU wird in aller Regel durch die Verarbeitbarkeit wie auch das gewünschte Eigenschaftsspektrum bestimmt. Üblicherweise liegt das mittlere Molekulargewicht der TPU erfindungsgemäß nicht über etwa 800 000. Bei den vorstehend für das TPU wie auch für die Aufbaukomponenten (a) und (b) angegebenen mittleren Molekulargewichten handelt es sich um die mittels Gelpermeationschromatographie bestimmten Gewichtsmittel.

Als besonders vorteilhaft haben sich erfindungsgemäß flammfest ausgerüstete TPU auf Polyester-Basis, d.h. auf Basis thermoplastisch verarbeitbarer Polyadditionsprodukte aus den vorstehend beschriebenen Diisocyanaten (a), höhermolekularen Polyesterolen (b) und Kettenverlängerern (c), erwiesen.

Die erfindungsgemäßen selbstverlöschenden TPU enthalten üblicherweise, jeweils bezogen auf die Mischung aus TPU und Flammschutzmittel, etwa 35 bis 80 Gew.-%, insbesondere 50 bis 75 Gew.-%, an TPU und an Flammschutzmittel 3 bis 15 Gew.-%, vorzugsweise 5 bis 12 Gew.-%, der organischen Phosphate und/oder organischen Phosphonate sowie Melamincyanurat in der Regel in Mengen von wenigstens 10 Gew.-%, vorzugsweise in Mengen von 20 bis 35 Gew.-%, bezogen auf die Mischung von TPU und Flammschutzmittel.

Gegebenenfalls in den erfindungsgemäßen selbstverlöschenden TPU neben den Flammschutzmitteln noch enthaltene weitere Hilfs- und/oder Zusatzstoffe (f) werden in den für diese Stoffe üblichen und bekannten wirksamen Mengen eingesetzt.

Die erfindungsgemäßen TPU-Formmassen sind selbstverlöschend, tropfen nicht bzw. nicht brennend ab und weisen gute mechanische und Verarbeitungseigenschaften auf.

Die Erfindung wird durch die nachstehenden Beispiele näher erläutert. Die jeweils verwendeten Flammschutzmittel, deren Einsatzmengen sowie die Eigeschaften der hergestellten TPU sind aus der Tabelle ersichtlich.

### Vergleichsbeispiel

Es wurde ein TPU-Formkörper aus Polyoxytetramethylenglycol (PTHF) mit einem mittleren Molekulargewicht (Gewichtsmittel) von 1000, 4,4'-Diphenylmethandiisocyanat und Butandiol-1,4 bei einer Temperatur von ca. 180°C nach dem Bandverfahren mit einer Härte von Shore A 85 ohne Einsatz von Flammschutzmittel hergestellt und seine Eigenschaften bestimmt.

### Beispiele 1 - 7

TPU wurde wie im Vergleichsbeispiel beschrieben hergestellt, wobei aber - wie in der Tabelle angegeben - Melamincyanurat, Phosphorsäure-1,3-Phenylen-tetraxylenylester (Produkt 1), Phosphorsäure-1,3-Phenylen-tetraphenylester (Produkt 2) bzw. Phosphorsäure-1,3-Phenylen-tetraphenylester-Oligomeres (mittlerer Oligomerisierungsgrad n = 3) (Produkt 3) als Flammschutzmittel verwendet wurden. Die in der Tabelle angeführten Gew.-% beziehen sich auf die Gesamt-Mischung.

**Tabelle**

| Bsp | Melamin-Cyanurat (Gew.-%) | Produkt 1 (Gew.-%) | Produkt 2 (Gew.-%) | Produkt 3 (Gew.-%) | ZF | Abrieb (mm³) | Brennt |
|---|---|---|---|---|---|---|---|
| 1 | 25,00 | 4,00 | - | - | 25 | 53 | VO |
| 2 | 25,00 | 4,75 | - | - | 26 | 51 | VO |
| 3 | 25,00 | 5,00 | - | - | 30 | 48 | VO |
| 4 | 25,00 | 6,00 | - | - | 26 | 73 | V1 |
| 5 | 25,00 | 10,00 | - | - | 18 | - | i.O.* |
| 6 | 25,00 | - | 7,50 | - | 35 | 40 | VO |
| 7 | 25,00 | - | - | 7,50 | 35 | 34 | i.O.* |
| Vergl Bsp | - | - | - | - | 50 | 35 | nicht |

| | | | | | | | |
|---|---|---|---|---|---|---|---|
| Abrieb: nach DIN 53 516 ZF: Zugfestigkeit in N/mm³ Brenntest nach -UL94V-Prüfung gemäß Underwriters Laboratories UL94 Flamability-Test: VO = sehr gut V1 = gut nicht = nicht klassifiziert * i.O.: Probe wurde im Handbrenntest geprüft und zeigte ein Verhalten entsprechend VO - V1. | | | | | | | |

Die erfindungsgemäßen TPU zeigten alle ein gutes Verhalten im Brenntest bei zufriedenstellenden mechanischen Eigenschaften.

## Patentansprüche

1. Selbstverlöschende thermoplastische Polyurethane, enthaltend mindestens ein Flammschutzmittel sowie gegebenenfalls weitere an sich übliche Hilfs- und/oder Zusatzstoffe in wirksamen Mengen, **dadurch gekennzeichnet, daß** als Flammschutzmittel mindestens eine Verbindung aus der Gruppe der organischen Phosphate und/oder organischen Phosphonate und zusätzlich zu den organischen Phosphaten und/oder organischen Phosphonaten noch Melamincyanurat enthalten ist.

2. Selbstverlöschende thermoplastische Polyurethane nach Anspruch 1, **dadurch gekennzeichnet, daß** sie als Flammschutzmittel mindestens ein organisches Phosphat der allgemeinen Formel (I) 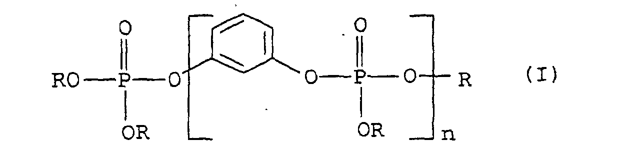 enthalten, wobei R für gegebenenfalls substituierte, Alkyl-, Cycloalkyl- oder Phenylgruppen steht und n = 1 bis 15 bedeutet.

3. Selbstverlöschende thermoplastische Polyurethane nach Anspruch 2, **dadurch gekennzeichnet, daß** sie als Flammschutzmittel solche organischen Phosphate der allgemeinen Formel (I) enthalten, in denen R = Phenyl oder alkylsubstituiertes Phenyl ist.

4. Selbstverlöschende thermoplastische Polyurethane nach Anspruch 1, **dadurch gekennzeichnet, daß** sie als Flammschutzmittel mindestens ein organisches Phosphonat der allgemeinen Formel (II) 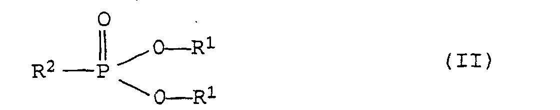 enthalten, wobei
R¹ : für gegebenenfalls substituierte, Alkyl-, Cycloalkyl- oder Phenylgruppen steht, wobei die beiden Reste R¹ auch cyclisch miteinander verknüpft sein können und
R² : für einen, gegebenenfalls substituierten, Alkyl-, Cycloalkyl- oder Phenylrest steht.

5. Selbstverlöschende thermoplastische Polyurethane nach einem der Ansprüche 1 bis 4, **dadurch gekennzeichnet, daß** es sich bei dem thermoplastischen Polyurethan um ein Polyadditionsprodukt aus einem oder mehreren Diisocyanaten, einem oder mehreren höhermolekularen Polyesterdiolen sowie einem oder mehreren niedermolekularen Diolen als Kettenverlängerer handelt.

6. Selbstverlöschende thermoplastische Polyurethane nach einem der Ansprüche 1 bis 5, **dadurch gekennzeichnet, daß** sie jeweils bezogen auf die Mischung aus thermoplastischem Polyurethan und Flammschutzmittel, 35 bis 80 Gew.-%, insbesondere 50 bis 75 Gew.-%, an dem thermoplastischen Polyurethan, 3 bis 15 Gew.-%, vorzugsweise 5 bis 12 Gew.-%, an organischen Phosphaten und/oder organischen Phosphonaten und bis zu 50 Gew.-%, insbesondere 10 bis 40 Gew.-%, an Melamincyanurat enthalten.

7. Verfahren zur Herstellung von selbstverlöschenden thermoplastischen Polyurethanen gemäß einem der Ansprüche 1 bis 6 durch Umsetzung von
a) organischen und/oder modifizierten organischen Diisocyanaten mit
b) höhermolekularen Polyhydroxylverbindungen und gegebenenfalls
c) Kettenverlängerungsmitteln in Gegenwart
d) mindestens eines Flammschutzmittels,
e) mindestens eines Katalysators sowie gegebenenfalls
f) weiterer Hilfsmitteln und/oder Zusatzstoffe,
**dadurch gekennzeichnet, daß** als Flammschutzmittel mindestens eine Verbindung aus der Gruppe der organischen Phosphate und der organischen Phosphonate und zusätzlich zu den organischen Phosphaten und/oder organischen Phosphonaten noch Melamincyanurat verwendet wird.

8. Verfahren nach Anspruch 7, **dadurch gekennzeichnet, daß** als höhermolekulare Polyhydroxylverbindung (b), Polyesterdiole eingesetzt werden.

## Claims

1. A self-extinguishing thermoplastic polyurethane comprising at least one flame retardant and, if desired, effective amounts of further auxiliaries and/or additives which are customary per se, wherein the flame retardants present comprise at least one compound selected from the group consisting of organic phosphates and organic phosphonates and, in addition to the organic phosphates and/or organic phosphonates, melamine cyanurate.

2. A self-extinguishing thermoplastic polyurethane as claimed in claim 1, wherein the flame retardants present comprise at least one organic phosphate of the formula (I) 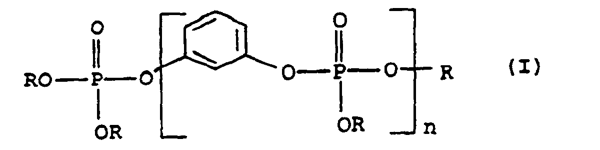 where R are substituted or unsubstituted alkyl, cycloalkyl or phenyl groups and n = 1-15.

3. A self-extinguishing thermoplastic polyurethane as claimed in claim 2, wherein the flame retardants present comprise organic phosphates of the formula (I) in which R = phenyl or alkyl-substituted phenyl.

4. A self-extinguishing thermoplastic polyurethane as claimed in claim 1, wherein the flame retardants present comprise at least one organic phosphonate of the formula (II) 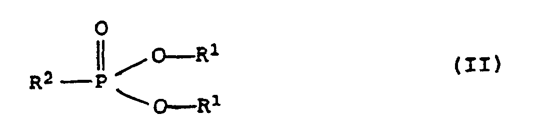 where
R¹ are substituted or unsubstituted alkyl, cycloalkyl or phenyl groups and the two radicals R¹ can also be linked to one another to form a ring and
R² is a substituted or unsubstituted alkyl, cycloalkyl or phenyl radical.

5. A self-extinguishing thermoplastic polyurethane as claimed in any of claims 1 to 4, wherein the thermoplastic polyurethane is a polyaddition product derived from one or more diisocyanates, one or more relatively high molecular weight polyester diols and also one or more low molecular weight diols as chain extenders.

6. A self-extinguishing thermoplastic polyurethane as claimed in any of claims 1 to 5 comprising, in each case based on the mixture of thermoplastic polyurethane and flame retardant, from 35 to 80% by weight, in particular from 50 to 75% by weight, of the thermoplastic polyurethane, from 3 to 15% by weight, preferably from 5 to 12% by weight, of organic phosphates and/or organic phosphonates and up to 50% by weight, in particular from 10 to 40% by weight, of melamine cyanurate.

7. A process for preparing self-extinguishing thermoplastic polyurethanes as claimed in any of claims 1 to 6 by reacting
a) organic and/or modified organic diisocyanates with
b) relatively high molecular weight polyhydroxyl compounds and, if desired,
c) chain extenders in the presence of
d) at least one flame retardant,
e) at least one catalyst and, if desired,
f) further auxiliaries and/or additives,
wherein the flame retardants used comprise at least one compound selected from the group consisting of organic phosphates and organic phosphonates and, in addition to the organic phosphates and/or organic phosphonates, melamine cyanurate.

8. A process as claimed in claim 7, wherein the relatively high molecular weight polyhydroxyl compounds (b) are polyester diols.

## Revendications

1. Polyuréthanes thermoplastiques auto-extincteurs, contenant au moins un agent ignifuge, de même qu'éventuellement d'autres adjuvants et/ou additifs courants en soi, en quantités efficaces, **caractérisés en ce qu'**y est contenu à titre d'agent ignifuge au moins un composé choisi dans le groupe des phosphates organiques et/ou des phosphonates organiques et, en plus des phosphates organiques et/ou des phosphonates organiques, encore du cyanurate de mélamine.

2. Polyuréthanes thermoplastiques auto-extincteurs selon la revendication 1, **caractérisés en ce qu'**ils contiennent à titre d'agent ignifuge, au moins un phosphate organique répondant à la Formule générale (I) 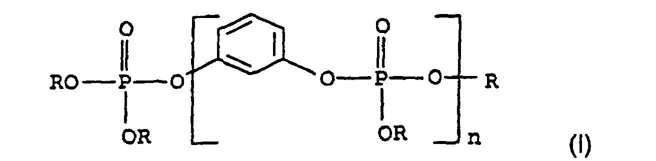 où R représente des groupes alkyle, cycloalkyle ou phényle, éventuellement substitués, et n vaut 1 à 15.

3. Polyuréthanes thermoplastiques auto-extincteurs selon la revendication 2, **caractérisés en ce qu'**ils contiennent à titre d'agent ignifuge des phosphates organiques répondant à la Formule générale (I) dans lesquels R représente un groupe phényle ou un groupe phényle substitué par un groupe alkyle.

4. Polyuréthanes thermoplastiques auto-extincteurs selon la revendication 1, **caractérisés en ce qu'**ils contiennent à titre d'agent ignifuge au moins un phosphonate organique répondant à la Formule générale (II) 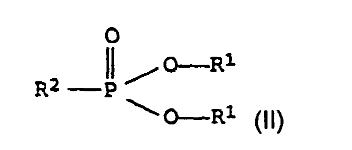 où
R¹ : représente des groupes alkyle, cycloalkyle ou phényle, éventuellement substitués, les deux résidus R¹ pouvant également être reliés ensemble en formant un cycle et
R² : représente un résidu alkyle, cycloalkyle ou phényle, éventuellement substitué.

5. Polyuréthanes thermoplastiques auto-extincteurs selon l'une quelconque des revendications 1 à 4, **caractérisés en ce que** dans le cas du polyuréthane thermoplastique, il s'agit d'un produit de polyaddition d'un ou de plusieurs diisocyanates, d'un ou de plusieurs polyesterdiols à poids moléculaire élevé, de même que d'un ou de plusieurs diols à faible poids moléculaire à titre d'agent d'allongement de chaîne.

6. Polyuréthanes thermoplastiques auto-extincteurs selon l'une quelconque des revendications 1 à 5, **caractérisés en ce qu'**ils contiennent, respectivement par rapport au mélange de polyuréthane thermoplastique et d'agent ignifuge, 35 à 80 % en poids, en particulier 50 à 75 % en poids du polyuréthane thermoplastique, 3 à 15 % en poids, de préférence 5 à 12 % en poids des phosphates organiques et/ou des phosphonates organiques, de même que jusqu'à 50 % en poids, en particulier 10 à 40 % en poids de cyanurate de mélamine.

7. Procédé de préparation de polyuréthanes thermoplastiques auto-extincteurs selon l'une quelconque des revendications 1 à 6, par réaction
a) de diisocyanates organiques et/ou organiques modifiés, avec
b) des composés polyhydroxylés à poids moléculaire élevé et éventuellement
c) des agents d'allongement de chaîne, en présence
d) d'au moins un agent ignifuge,
e) d'au moins un catalyseur, de même qu'éventuellement
f) d'autres adjuvants et/ou additifs,
**caractérisé en ce qu'**on utilise à titre d'agent ignifuge au moins un composé choisi dans le groupe des phosphates organiques et des phosphonates organiques et, en plus des phosphates organiques et/ou des phosphonates organiques, encore du cyanurate de mélamine.

8. Procédé selon la revendication 7, **caractérisé en ce qu'**on utilise à titre de composé polyhydroxylé (b) à poids moléculaire élevé, des polyesterdiols.
